(19) Europäisches Patentamt
European Patent Office
Office européen des brevets

(11) **EP 4 564 326 A1**

(12) **EUROPEAN PATENT APPLICATION**

(43) Date of publication:
04.06.2025 Bulletin 2025/23

(21) Application number: 23213596.2

(22) Date of filing: 01.12.2023

(51) International Patent Classification (IPC):
*G08G 1/00* (2006.01)

(52) Cooperative Patent Classification (CPC):
G08G 1/0112; G01C 21/343; G01C 21/3453;
G01C 21/3469; G06Q 10/04; G06Q 10/047;
G06Q 10/06; G06Q 10/08355; G06Q 50/40;
G08G 1/0133; G08G 1/0145; G08G 1/096725;
G08G 1/096741; G08G 1/096775; G08G 1/096822;
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Volvo Autonomous Solutions AB
405 08 Göteborg (SE)**

(72) Inventors:
• FORCOLIN, Fabio
416 73 GÖTEBORG (SE)
• ROGENFELT, Åsa
41478 GÖTEBORG (SE)

(74) Representative: **Kransell & Wennborg KB**
P.O. Box 2096
**403 12 Göteborg (SE)**

(54) **SYSTEM AND METHOD OF CONTROLLING MOVEMENTS OF VEHICLES**

(57) The present disclosure relates to a computer system (100) for controlling movements of a plurality of vehicles (10a to 10n) in a confined geographical area (200), the computer system comprises processing circuitry (102) configured to: define at least one vehicle path (110) within the confined geographical area by a subset of static nodes, the subset of static nodes defining a topological representation of the at least one vehicle path, each static node further having a set of vehicle-related threshold conditions; obtain real-time vehicle travelling profiles of the plurality of vehicles; determine, for each vehicle of the plurality of vehicles, a vehicle location at a given point of time based on data from the static nodes and the obtained real-time vehicle travelling profiles; generate a traffic planning data structure for the plurality of the vehicles, the traffic planning data structure containing, for each vehicle, data indicative of the determined vehicle location at the given point in time and the positional order of the static node occupied by the vehicle; from the generated traffic planning data structure, determine that at least one vehicle of the plurality of vehicles exceeds at least one vehicle-related threshold condition of the set of vehicle-related threshold conditions; apply a cost function on the data contained in the generated traffic planning data structure to identify an alternative movement control of the at least one vehicle through the at least one vehicle path, the alternative movement control being favorable for at least one traffic planning criterion; update the traffic planning data structure to an updated traffic planning data structure; and feed motion commands to the plurality of vehicles for realizing their routes based on the updated traffic planning data structure.

Fig. 1

(52) Cooperative Patent Classification (CPC): (Cont.)
 **G08G 1/096844**

**Description**

**TECHNICAL FIELD**

The disclosure relates generally to the field of centralized vehicle control. In particular aspects, the disclosure relates to system and method of controlling movements of vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

Autonomous vehicles have gained significant attention and investment in recent years as these vehicles offer the promise of increased safety, reduced traffic congestion, and improved transportation efficiency. Various sensors, cameras, and machine learning algorithms have been integrated into these vehicles to enable them to navigate roads, avoid obstacles, and follow traffic rules. However, controlling autonomous vehicles in geographical areas including dual vehicle lanes or single vehicle lanes may generally pose some challenges on the vehicle control system. Other geographical areas including one or more narrow passages, such as narrow bridges and narrow tunnels, poses some additional challenges that require further attention and new solutions. In such environments, the autonomous vehicles may need to adapt to even more dynamic conditions, including e.g. more demanding interaction with other adjacent vehicles so as to reduce the risk of collision.

Ensuring the safe and efficient operation of autonomous vehicles in such environments may thus necessitate further development of the control system for controlling such vehicles along their pathways.

**SUMMARY**

According to a first aspect of the disclosure, there is provided a computer system for controlling movements of a plurality of vehicles in a confined geographical area. The computer system comprises processing circuitry configured to: define at least one vehicle path within the confined geographical area by a subset of static nodes, the subset of static nodes defining a topological representation of the at least one vehicle path, each static node further having a set of vehicle-related threshold conditions; obtain real-time vehicle travelling profiles of the plurality of vehicles; determine, for each vehicle of the plurality of vehicles, a vehicle location at a given point of time based on data from the static nodes and the obtained real-time vehicle travelling profiles; generate a traffic planning data structure for the plurality of the vehicles, the traffic planning data structure containing, for each vehicle, data indicative of the determined vehicle location at the given point in time and the positional order of the static node occupied by the vehicle; from the generated traffic planning data structure, determine that at least one vehicle of the plurality of vehicles exceeds at least one vehicle-related threshold condition of the set of vehicle-related threshold conditions; apply a cost function on the data contained in the generated traffic planning data structure to identify an alternative movement control of the at least one vehicle through the at least one vehicle path, the alternative movement control being favorable for at least one traffic planning criterion among a group of criteria comprising reducing fuel consumption, fulfilling a transport mission and reducing vehicle wear; update the traffic planning data structure to an updated traffic planning data structure based on the identified alternative movement control; and feed motion commands to the plurality of vehicles for realizing their routes based on the updated traffic planning data structure.

The first aspect of the disclosure may seek to improve productivity for moving vehicles in a confined geographical area with a vehicle path having one or more road segments with predefined narrow boundaries, such as dual lanes, single lane, narrow roads, bridges, and/or tunnels, and where there are few or no alternative routes for the vehicles. One example of such road segments may be a tunnel having dual lanes or a single lane. A technical benefit may include to provide a more efficient traffic planning operation of a number of vehicles in that the computer system is configured to evaluate and identify one or more alternative movement controls for one or more vehicles so as to determine whether one or more operations of the vehicles can be adjusted within the confined geographical area to improve the productivity. By applying a cost function on the data contained in the generated traffic planning data structure to identify an alternative movement control of at least one vehicle through the at least one vehicle path, it becomes possible to improve the traffic planning in terms of one or more criterion, including fuel consumption, fulfillment of the planned transport mission and vehicle wear. By way of example, the proposed computer system may detect a situation where two or more vehicles are approaching a single lane within the confined geographical area and further decide to slow down one of the vehicles well-ahead of an entrance of the single lane, while controlling the other vehicle along and through the single lane, rather than deciding to operate the vehicles to the entrance and then let one of the vehicles traverse the single lane, while the other vehicle is standing still. Planning and controlling vehicles in this manner allows for reducing fuel consumption and vehicle wear, as starting from stand still may generally be more expensive in terms of fuel consumption, especially on non-flat road surfaces.

To this end, the proposed computer system provides for improving not only safety of the vehicles and the efficiency of the traffic planning, but may also positively contribute to improved sustainability and scalability. The computer system according to the first aspect of the disclosure thus provides for improved route planning. A particular objective is to propose an improved traffic planning for autonomous vehicles, such as autonomous trucks controllable from a cloud-based server or any local (on-site) device.

The computer system may thus be configured to execute a number of operations (such as method steps) in order to increase productivity and/or to minimize the time it takes for the vehicles to execute their routes. Productivity can be quantified as the number of useful transport work per unit time and/or per vehicle.

Optionally, in some examples, including in at least one preferred example, the identified alternative movement control in the updated traffic planning data structure may comprise an adjustment of one or more vehicle travelling profiles. A technical benefit may include identifying a direct movement control adjustment of one of more vehicles so as to improve the traffic planning operation and the productivity of the vehicles.

In one example, the identified alternative movement control is an adjustment in vehicle speed of one or more vehicles.

Optionally, in some examples, including in at least one preferred example, the set of vehicle-related threshold conditions may comprise at least a threshold condition defining a maximum allowed speed for a vehicle passing through a given static node. A technical benefit may include allowing the computer system to determine the needed time for a vehicle to pass through the node (i.e. a vehicle segment or a part of the vehicle path defined by the node).

Optionally, in some examples, including in at least one preferred example, the processing circuitry may be configured to determine that at least one vehicle of the plurality of vehicles exceeds the set of vehicle-related threshold conditions by determining that a vehicle in a given static node exceeds the maximum allowed speed for a vehicle passing through the given static node. A technical benefit may include enabling the computer system to determine a risk of collision within the given static node and/or the likelihood of requiring the computer system to control one or more vehicles to a standstill state at the entrance of the vehicle path (so as to avoid a collision within the given static node).

Optionally, in some examples, including in at least one preferred example, the set of vehicle-related threshold conditions may comprise at least a threshold condition defining a maximum number of allowed vehicles in a given static node. A technical benefit may include providing a more advanced and comprehensive traffic planning system.

Optionally, in some examples, including in at least one preferred example, the processing circuitry may be configured to determine that at least one vehicle of the plurality of vehicles exceeds the set of vehicle-related threshold conditions in the given static node by determining that the number of vehicles in the given static node exceeds the maximum number of allowed vehicles in the given static node. A technical benefit may include providing a more advanced and comprehensive traffic planning system.

Optionally, in some examples, including in at least one preferred example, the at least one vehicle path further contains at least one route segment with an entrance and an exit for the vehicle.

Optionally, in some examples, including in at least one preferred example, the vehicle travelling profiles may comprise vehicle travelling data and vehicle operational status data. A technical benefit may include providing a more advanced and comprehensive traffic planning system. A technical benefit may also include providing an even more improved control of the movements of the vehicles in terms of adaptability and productivity.

Optionally, in some examples, including in at least one preferred example, the vehicle travelling data may comprise any one of current vehicle speed of one or more vehicles, estimated time of arrival to a destination for one or more vehicles, and travel plan indicative of a required set of nodes to traverse for one or more vehicles. A technical benefit may include providing a more advanced and comprehensive traffic planning system.

Optionally, in some examples, including in at least one preferred example, the vehicle operational status data comprises data indicative of a vehicle capability parameter. A technical benefit may include to further improve the traffic planning system by using additional data relating to the status of the vehicle(s). Examples of capability parameters are vehicle weight, fuel consumption, indication of any engaged gear, power source temperature, state of charge (SOC) etc. Such data may also be used in combination with road data, such as road condition, e.g. pitch angle.

Optionally, in some examples, including in at least one preferred example, the vehicle path within the confined geographical area is defined by a subset of static nodes using a route optimizing algorithm. A technical improvement may include increasing the computational efficiency and precision of the computer system.

Optionally in some examples, including in at least one preferred example, the route optimizing algorithm is any one of a Djikstra's algorithm and A*. A technical benefit may include to further improve the computational efficiency and precision of the computer system.

Optionally, in some examples, including in at least one preferred example, the cost function is configured to compare a number of different alternative movement controls for the plurality of vehicles based on predicted fuel consumption, predicted time for fulfilling a transport mission, predicted vehicle wear. A technical benefit may include providing a more advanced and comprehensive traffic planning system.

Optionally, in some examples, including in at least one preferred example, the updated traffic planning data structure based on the identified alternative movement control meets the set of vehicle-related threshold conditions defined by the set of static nodes. A technical benefit may include providing an even more improved determination of the suitability of the identified alternative movement control.

According to a second aspect of the disclosure, there is provided a vehicle comprising the computer system of the first aspect.

The second aspect of the disclosure may seek to improve productivity for moving vehicles in a confined geographical area with a vehicle path having one or more road segments with predefined narrow boundaries, such as dual lanes, single lane, narrow roads, bridges, and/or tunnels, and where there are few or no alternative routes for the vehicles. One example of such road segments may be a tunnel having dual lanes or a single lane. A technical benefit may include to provide a more efficient traffic planning operation of a number of vehicles in that the computer system is configured to evaluate and identify one or more alternative movement controls for one or more vehicles so as to determine whether one or more operations of the vehicles can be adjusted within the confined geographical area to improve the productivity.

According to a third aspect of the disclosure, there is provided a computer-implemented method for controlling movements of a plurality of vehicles in a confined geographical area, the computer-implemented method comprising: defining, by a processing circuitry of a computer system, at least one vehicle path within the confined geographical area by a subset of static nodes, the subset of static nodes defining a topological representation of the at least one vehicle path, each static node further having a set of vehicle-related threshold conditions; obtaining, by the processing circuitry of the computer system, real-time vehicle travelling profiles of the plurality of vehicles; determining, by the processing circuitry of the computer system, for each vehicle of the plurality of vehicles, a vehicle location at a given point of time based on data from the static nodes and the obtained real-time vehicle travelling profiles; generating, by the processing circuitry of the computer system, a traffic planning data structure for the plurality of the vehicles, the traffic planning data structure containing, for each vehicle, data indicative of the determined vehicle location at the given point in time and the positional order of the static node occupied by the vehicle; from the generated traffic planning data structure, determining, by the processing circuitry of the computer system, that at least one vehicle of the plurality of vehicles exceeds at least one vehicle-related threshold condition of the set of vehicle-related threshold conditions; applying, by the processing circuitry of the computer system, a cost function on the data contained in the generated traffic planning data structure to identify an alternative movement control of the at least one vehicle through the at least one vehicle path, the alternative movement control being favorable for at least one traffic planning criterion among a group of criteria comprising reducing fuel consumption, fulfilling a transport mission and reducing vehicle wear; updating, by the processing circuitry of the computer system, the traffic planning data structure to an updated traffic planning data structure based on the identified alternative movement control; and feeding, by the processing circuitry of the computer system, motion commands to the plurality of vehicles for realizing their routes based on the updated traffic planning data structure.

The third aspect of the disclosure may seek to improve productivity for moving vehicles in a confined geographical area with a vehicle path having one or more road segments with predefined narrow boundaries, such as dual lanes, single lane, narrow roads, bridges, and/or tunnels, and where there are few or no alternative routes for the vehicles. One example of such road segments may be a tunnel having dual lanes or a single lane. A technical benefit may include to provide a more efficient traffic planning operation of a number of vehicles in that the computer system is configured to evaluate and identify one or more alternative movement controls for one or more vehicles so as to determine whether one or more operations of the vehicles can be adjusted within the confined geographical area to improve the productivity.

According to a fourth aspect of the disclosure, there is provided a computer program product comprising program code for performing, when executed by the processing circuitry comprised in the computer system of the first aspect, the method of the third aspect.

According to a fifth aspect of the disclosure, there is provided a non-transitory computer-readable storage medium comprising instructions, which when executed by the processing circuitry of the first aspect, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

**FIG. 1** illustrates an exemplary view of a number of vehicles travelling within a confined geographical area and a computer system comprising processing circuitry configured to control movement of the vehicles within the confined geographical area according to an example.

**FIGS. 2A to 2C** illustrate exemplary time-series views of a number of vehicles travelling within a confined geographical area according to examples.

**FIG. 3** illustrates an exemplary view of a number of vehicles travelling within a confined geographical area and a computer system comprising processing circuitry configured to control movement of the vehicles within the confined geographical area according to an example.

**FIGS. 4A to 4C** illustrate exemplary time-series views of a number of vehicles travelling within a confined geographical area according to examples.

**FIG. 5** is a flow chart of an exemplary method to control a plurality of vehicles according to an example.

**FIG. 6** is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

The present disclosure is at least partly based on the realization that controlling and moving vehicles on a road may still be challenging in terms of planning and execution. In addition, there is an increased demand for ensuring a relatively high level of productivity. By way of example, dynamic movement of other vehicles within the same area may generally affect the time for transportation of goods between a departure position and a destination position as well as increasing the demands for controlling the vehicles in a safe manner, e.g. without increasing the risk of collision. As such, the transportation of goods by vehicle(s) from one position to another position is still difficult. One type of transportation by vehicles relates to transportation of goods by one or more autonomous vehicles, such as autonomous trucks. For example, in advanced driver assistance systems for autonomous vehicles, the selection of a driving strategy for intelligent connected vehicles may often need to take into consideration motion behaviors of other vehicles, including e.g. speed differences, transportation directions, lane changing and lane keeping of the other vehicles, where the lane changing of the vehicles may not only pose a threat to road traffic safety, but also affect the transportation as such in term of efficiency.

For these and other reasons, there is still a need for improving traffic planning of vehicles as well as controlling movement of vehicles, e.g. between a starting point (departure position) and an end point (such as a destination position), within a confined geographical area.

To remedy this, the present disclosure provides systems and methods for controlling movements of a plurality of vehicles in a confined geographical area in an improved manner. The disclosure may seek to improve productivity for moving vehicles in a confined geographical area with a vehicle path having one or more road segments with predefined narrow boundaries, such as dual lanes, single lane, narrow roads, bridges, and/or tunnels, and where there are few or no alternative routes for the vehicles. One example of such road segments may be a tunnel having dual lanes or a single lane. A technical benefit may include to provide a more efficient traffic planning operation of a number of vehicles in that the computer system is configured to evaluate and identify one or more alternative movement controls for one or more vehicles so as to determine whether one or more operations of the vehicles can be adjusted within the confined geographical area to improve the productivity. By applying a cost function on the data contained in the generated traffic planning data structure to identify an alternative movement control of at least one vehicle through the at least one vehicle path, it becomes possible to improve the traffic planning in terms of one or more criterion, including fuel consumption, fulfillment of the planned transport mission and vehicle wear. By way of example, the proposed computer system may detect a situation where two or more vehicles are approaching a single lane within the confined geographical area and further decide to slow down one of the vehicles well-ahead of an entrance of the single lane, while controlling the other vehicle along and through the single lane, rather than deciding to operate the vehicles to the entrance and then let one of the vehicles traverse the single lane, while the other vehicle is standing still. Planning and controlling vehicles in this manner allows for reducing fuel consumption and vehicle wear, as starting from stand still may generally be more expensive in terms of fuel consumption, especially on non-flat road surfaces.

To this end, the proposed computer system provides for improving not only safety of the vehicles and the efficiency of the traffic planning, but may also positively contribute to improved sustainability and scalability.

The computer system according to the examples herein thus provides for improved route planning. A particular objective is to propose an improved traffic planning for autonomous vehicles, such as autonomous trucks controllable from a cloud-based server or any local (on-site) device.

The vehicles may be any type of vehicle suitable for transporting goods, such as bulk material from one location to another. For example, the vehicle may be an excavator, loader, articulated hauler, dump truck, truck or any other suitable vehicle known in the art. In some embodiments, the vehicle may be driven by an operator. In other embodiments, the vehicle may be an autonomous vehicle that is controlled by a vehicle motion management (VMM) unit configured to individually control vehicle units and/or vehicle axles and/or wheels of the vehicle. For ease of reference, the following description refers to vehicles in the form of autonomous vehicles, in particular autonomous trucks.

The vehicles may include one or more power sources and may be electric vehicles, hybrid vehicles, and/or vehicles comprising an internal combustion engine system. A combination of vehicles may also be considered, such as a number of electric vehicles and a number of hybrid vehicles.

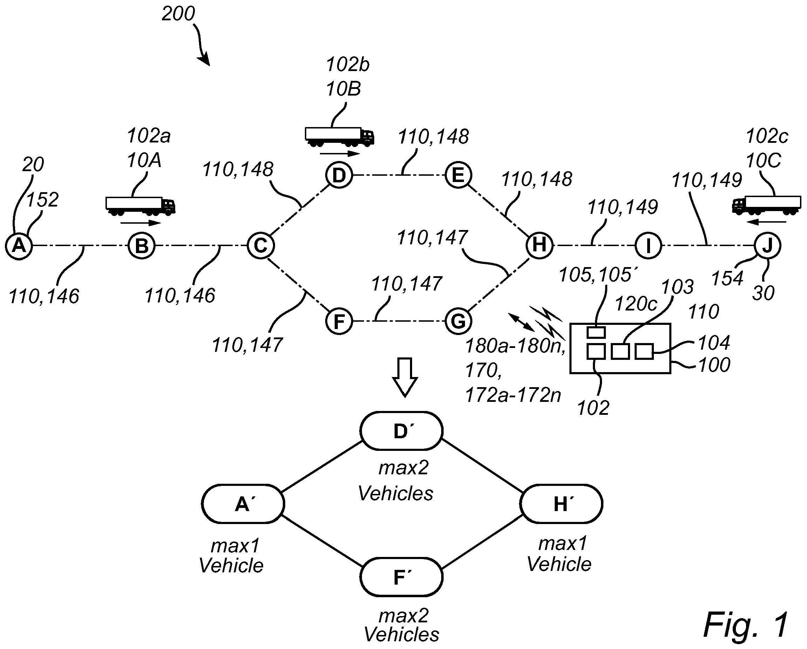

FIG. 1 is a view of a substantially flat trafficable environment illustrating a defined geographical area 200, in which a plurality of vehicles 10a, 10b move along a common predefined route that connects a departure position 20, e.g. a loading station, and a destination position, e.g. a chute 30, via at least one vehicle path 110. The vehicle path 110 here contains a number of road segments 146, 147, 148, and 149. In FIG. 1, the vehicle path 110 contains at least the road segments 146, 147, 148, and 149. In other examples, the vehicle path 110 contains another number of different road segments or another combination of the road segments. In other examples, the defined geographical area 200 contains a plurality of vehicle paths 110, each vehicle path being defined by a number of road segments.

Turning again to FIG. 1, there is illustrated a geographical area 200 comprising a vehicle path 110 having four road segments 146, 147, 148, and 149. The two road segments 147 and 148 here define parallel road segments. The vehicle path 110, or at least parts of the vehicle path 110, may e.g. be a narrow tunnel, a narrow bridge or the like. The vehicle path 110 has an entrance 152 and an exit 154, as depicted in FIG. 1. It should be readily appreciated that the terms entrance and exit are used to denote access points for a vehicle to the vehicle path 110, and that an entrance position for a first vehicle travelling in a first direction may likewise be an exit position for another vehicle travelling in a second direction, the second direction being an opposite direction to the first direction. Hence, the entrance and the exist can be different or same for different vehicles depending on their driving direction.

Moreover, the at least one vehicle path 110 is delimited to a dual lane or single lane. A single lane here refers to a road segment where two vehicles cannot meet without colliding with each other, or at least a road segment where two vehicles cannot move on as planned without having a negative impact on each other's intended routes (i.e. as compared to a road segment without any other vehicles on the road). A single lane may also, or alternatively, refer to a road segment where there is no possibility for any overtaking. As such, a single lane can generally be occupied by at most one vehicle at a time. In a single vehicle lane there is only one lane available with no alternative routes for the set of vehicles. Examples of such single vehicle lane can be found in narrow tunnels, narrow bridges, narrow roads or similar, where there is only one available path for the vehicle.

A dual lane refers to a road segment with two lanes. Hence, in a dual lane, at least two vehicles are able to meet without colliding with each other.

Hence, in the context of the disclosure a road segment may refer to a single lane or a dual lane.

The vehicles 10a, 10b, 10c in FIG. 1 are operated under the control of a computer system 100. The computer system 100 is here a traffic planner, or at least an integral part of a traffic planner. The computer system 100 comprises processing circuitry 102 configured to perform a vehicle movement control method, as will be further described in e.g. FIGS. 1, 2A to 2C, 3, 4A to 4C, and 5. The computer system 100 here also comprises a memory 104. The computer system 100 optionally also comprises a wireless interface 103 suitable to communicate wirelessly with analogous interfaces (not shown) in the vehicles 10a, 10b, 10c. The communication may proceed over a local-area or wide-area wireless network, which may be of the cellular or non-cellular type. In the downlink direction, the wireless communication from the computer system 100 to the vehicles 10a, 10b, 10c may comprise motion commands for causing the vehicles 10a, 10b, 10c to realize the common predefined route, as provided and scheduled by the vehicle movement control method.

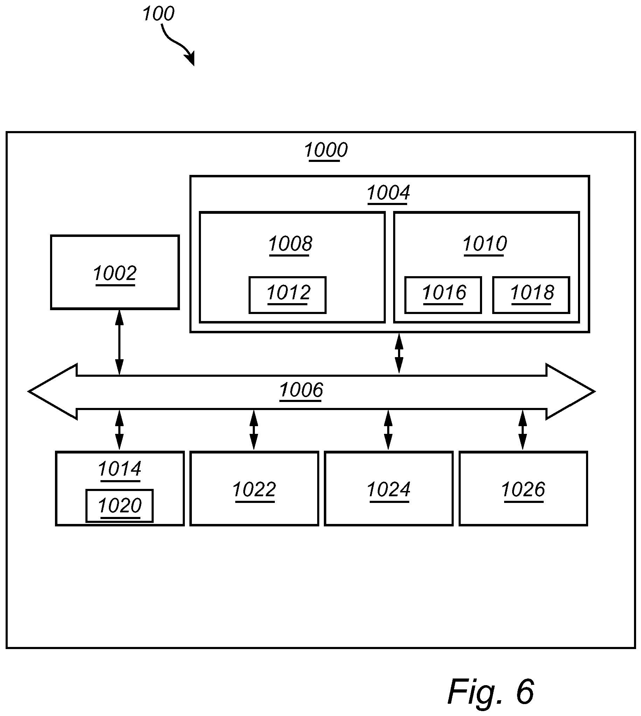

In the uplink direction, the vehicles 10a, 10b, 10c may transmit status indications (e.g., position, heading, technical conditions, emergencies) as well as acknowledgements that specific motion commands have been carried out. In some embodiments, the computer system 100 is not an endpoint in the wireless communication with the vehicles 10a, 10b, 10c but the wireless communication passes via one or more intermediate devices, such as a base station in a cellular radio access network. In such embodiments, it may be considered that the computer system 100 is implemented in a distributed fashion, with the processing circuitry 102 and wireless interface 103 located in different physical devices. Further details on the computer system 100 and the processing circuitry 102 are described below in relation to FIG. 6.

The computer system 100 and the processing circuitry 102 may in one example be part of a cloud server. In other examples, the computer system 100 and the processing circuitry 102 may be integral parts of the vehicles 10a to 10n, where each one of the vehicles 10a to 10n may contain corresponding processing circuitry forming part of the computer system. In other examples, the computer system and processing circuitry may be a combination of a cloud server and hardware architecture integrated in the vehicles.

The confined geographical area 200 in FIG. 1 can be modeled as a set of planning nodes. In particular, the confined geographical area 200 in FIG. is defined by a subset of static nodes A to J. The subset of static nodes A to J defines a topological representation of the at least one vehicle path 110. As illustrated in e.g. FIG. 1, the vehicle path 110 extends between the departure position 20 and the destination position 30, and here also comprises a number of road segments 146 to 149. In other words, the defined geographical area 200 includes one or more road segments. The road segments may also be considered as vehicle zones.

As such, the vehicle path 110 and the road segments 146 to 149 are predefined zones or areas of the defined geographical area 200, i.e. the vehicle path 110 and the vehicle road segments 146 to 149 are recorded in advance and used as a route to be followed by the vehicles 10a to 10n.

To this end, the static nodes A to J are provided to define the pathway(s) for the vehicles 10a to 10n. In FIG. 1, there is only three vehicles 10a, 10b and 10c illustrated. The static nodes A to J may or may not overlap with each other.

A static node may for example also be an intersection, a road segment, a waypoint, a maintenance or replenishment position. Conceivably, the loading station, the tunnel, the chute, as well as vehicle zones and road segments connecting these, could be represented in the computer system 100 as a set of static nodes A to J. In FIG. 1, one example of a distribution of the set of static nodes A to J is illustrated. The vehicle path 110 can be defined in several different manners. By way of example, the vehicle path 110 within the confined geographical area 200 is defined by the subset of static nodes A to J using a route optimizing algorithm. The route optimizing algorithm is any one of a Djikstra's algorithm and A*. Applying any of these algorithms belongs to common general knowledge and is thus not to be further described herein. Other route optimizing algorithms may also be used. The route optimizing algorithm is generally applied when finding the optimal route for a vehicle to traverse from the nodes, such as from the static node A to the static node B, or between any other nodes.

By way of example, the route optimizing algorithm, such as the Djikstra's algorithm or the A* algorithm) selects the best path among all possible paths.

Information describing the static nodes and their topology is available to the computer system 100, as are data about route segments, e.g. the two route segments, e.g. 146 and 147, as well as data about the vehicles 10a to 10c which are to move between the static nodes A to J. The route segment 146 is split into two new road segments 147 and 148 at the static node C. The road segments 147 and 148 then intersect at the static node H, as illustrated in FIG. 1. In the present example, the computer system 100 may further has at its disposal topographical information about the static nodes A to J in the form of contour lines from which the elevation difference between each pair of nodes can be derived.

Generally, a vehicle occupies at least one node in the shared set of static nodes A to J and is movable to other nodes along the road segments, as defined by one or more nodes. A road segment here generally extends between pairs of the nodes, as illustrated in FIG. 1.

FIG. 1 illustrates a certain number of static nodes A to J, however, any number of static nodes can be used to define one or more vehicle paths, such as the vehicle path 110, by one or more road segments.

In FIG. 1, the vehicle path 110 here contains four road segments 146 to 149. The vehicle path 110 thus comprises the road segments 146, 147, 148 and 149. Each one of the road segments may be defined by one or more static nodes, as depicted in FIG. 1. Moreover, a road segment, such as the road segment 146, may extend to a junction point, e.g. defined by the static node C, where the vehicle path 110 continues into two separate road segments, i.e. road segments 147 and 148, as illustrated in FIG. 1. Moreover, a pair of road segments may join (or intersect) at a junction point, such as the road segments 147 and 148, which intersect at the static node H, whereby the vehicle path 110 is further continued along the road segment 149. As mentioned above, a road segment may either be a single lane or a dual lane. In addition, or alternatively, a pair of road segments may define a dual lane, such as the road segment 147 and 148, see FIG. 1.

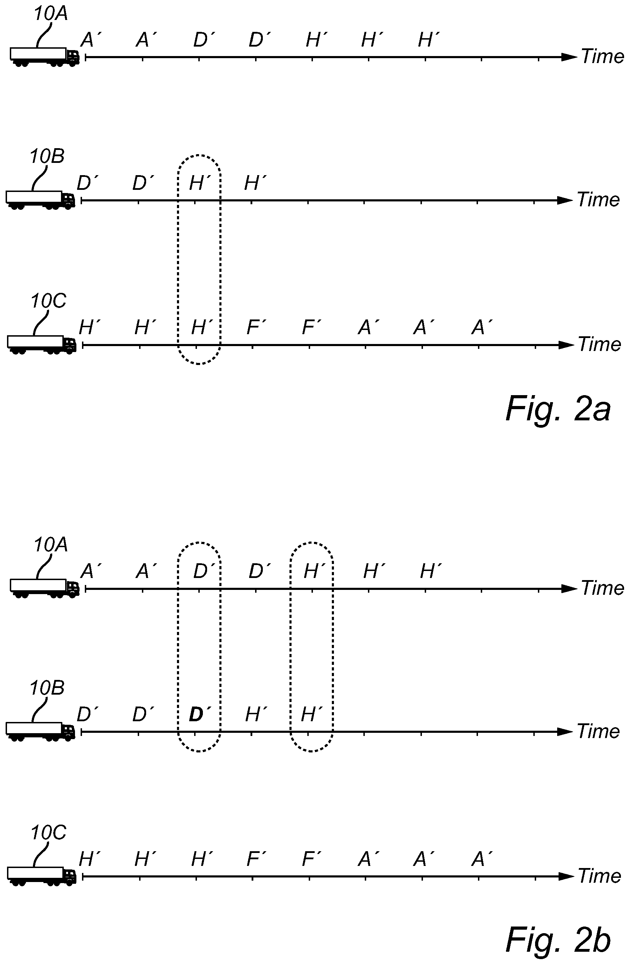

Turning again to FIG. 1 and the computer system 100. In this example, the computer system 100 is configured to control movements of a plurality of vehicles 10a to 10n. In FIG. 1, the plurality of vehicles is illustrated as three vehicles 10a, 10b, 10c. However, as will be further illustrated in other examples, e.g. in FIGS. 2A to 2C, 3, 4A to 4C, the number and position of vehicles may vary depending on situation. The plurality of vehicle can be two vehicles, four vehicles and even more vehicles. Hence, the computer system 100 is configured to control movement of any numbers of vehicles 10a to 10n.

In particular, the computer system 100 is configured to control movements of the vehicles 10a to 10n in the confined geographical area 200. Moreover, the computer system 100 comprises the processing circuitry 102. The processing circuitry 102 is configured to define the at least one vehicle path 110 within the confined geographical area 200.

The processing circuitry 102 is also configured to define at least one vehicle path 110 within the confined geographical area 200 by the subset of static nodes A to J.

The subset of static nodes A to J defines the topological representation of the at least one vehicle path 110. The at least one vehicle path 110 contains at least one road segment. The vehicle path 110 in FIG. 1 comprises four road segments 146 to 149. The at least one vehicle path 110 has the entrance 152 and the exit 154. Moreover, the at least one vehicle path 110 is delimited to a dual lane or a single lane.

To sum up, the vehicles 10a to 10n are operating in confined geographical area 20 having a vehicle path 110 consisting of single lanes and/or dual lanes. These lanes are topologically represented by above-mentioned static nodes A to J.

Each static node A to J also comprises one or more vehicle-related threshold conditions. These thresholds conditions are generally preconditions predefined by the computer system 100. In FIG. 1, each static node A to J comprises at least one vehicle-related threshold condition. The vehicle-related threshold condition is either a threshold condition defining a maximum allowed speed for a vehicle passing through a given static node or a threshold condition defining a maximum number of allowed vehicles in a given static node. The vehicle-related threshold condition thus determines when a vehicle is allowed to enter and exit a road segment.

Hence, the set of vehicle-related threshold conditions comprises a threshold condition defining a maximum allowed speed for a vehicle passing through a given static node.

In addition, or alternatively, the set of vehicle-related threshold conditions comprises a threshold condition defining a maximum number of allowed vehicles in a given static node.

In FIG. 1, each one of the static nodes A to J comprises the threshold condition defining a maximum allowed speed for a vehicle passing through a given static node and the threshold condition defining a maximum number of allowed vehicles in a given static node.

In some examples, it may be enough that the set of vehicle-related threshold conditions only comprises a single thresholds condition, such as the threshold condition defining a maximum allowed speed for a vehicle passing through a given static node or the threshold condition defining a maximum number of allowed vehicles in a given static node.

Turning again to FIG. 1, it is assumed that each vehicle f the vehicles 10a, 10b, 1c has received transportation data, transport mission and/or is controlled based on a transport mission comprising a travelling plan with the static nodes A to J the corresponding vehicle should traverse (pass through). Each one of the static nodes A to J comprises a condition setting a maximum allowed vehicle speed. From this maximum allowed vehicle speed, the computer system 100 determines the time it takes for a vehicle to pass through a static node. It is assumed that, by default, a vehicle moves at the maximum allowed speed, Moreover, it is assumed that a vehicle is allowed to decrease the vehicle speed, but not to increase the vehicle speed. In addition, as mentioned above, each one of the static nodes A to J comprises a condition indicating a maximum number of allowed vehicles.

The definition of the at least one vehicle path 110 within the confined geographical area 110 by the static nodes can be performed ahead of using the computer system 100 for the first time for controlling the movements of the plurality of vehicles 10a to 10n in the confined geographical area 200. However, the definition of the at least one vehicle path 110 within the confined geographical area 200 by the static nodes A to J can likewise be performed as needed or as desired, e.g. during use of the static nodes and/or after a number of operations of the vehicles within the confined geographical area 200. The definition of the at least one vehicle path 110 within the confined geographical area 200 by the static nodes A to J can also be updated when the vehicle path 110 is updated, e.g. when there is a change in the topological representation of the vehicle path 110.

Moreover, the processing circuitry 102 is also configured to obtain real-time vehicle travelling profiles 180a to 180n of the plurality of vehicles 10a to 10n. Hence, in FIG. 1, the processing circuitry 102 is configured to obtain real-time vehicle travelling profiles 180a to 180c of the three vehicles 10a to 10c.

The vehicle travelling profiles 180a to 180n can comprise several different type of data. By way of example, the vehicle travelling profiles 180a to 180n comprises real-time vehicle travelling data. In addition, the vehicle travelling profiles 180a to 180n may comprise real-time and vehicle operational status data.

In one example, the vehicle travelling profiles 180a to 180n comprises both vehicle travelling data and vehicle operational status data.

The vehicle travelling data comprises any one of current vehicle speed of one or more vehicles, estimated time of arrival to a destination for one or more vehicles, and a travel plan indicative of a required set of nodes to travers for one or more vehicles.

In addition, in some examples, the vehicle travelling profiles further comprises travelling data in the form of driving directions of the plurality of vehicles, scheduled routes of the plurality of vehicles, distance between the plurality of vehicles, relative time gaps between the plurality of vehicles, relative speed between the plurality of vehicles, speed differences between the plurality of vehicles, relative acceleration between the plurality of vehicles, planned activities by the plurality of vehicles within the confined geographical area, such as loading/unloading events.

The vehicle operational status data comprises data indicative of a vehicle capability parameter. Examples of vehicle capability parameters are vehicle weight, fuel consumption, indication of any engaged gear, power source temperature, state of charge (SOC) etc. Data indicative of vehicle capability parameters can be obtained from one or more vehicle sensors arranged on, or in, each one of the vehicles 10a to 10n. Such data may also be used in combination with obtained real-time road data, such as road condition, e.g. pitch angle.

Further, for each vehicle of the plurality of vehicles 10a to 10n, a vehicle location at a given point of time is determined based on data from the static nodes and the obtained real-time vehicle travelling profiles 180a to 180n. The current vehicle location is here defined by the number of the static nodes A to J.

This may generally mean that both current and future vehicle positions are determined. In other words, for each vehicle of the plurality of vehicles 10a to 10n, a current vehicle location at a given point of time is determined based on data from the static nodes and the obtained real-time vehicle travelling profiles 180a to 180n. The current vehicle location is here defined by the number of the static nodes A to J. Moreover, for each vehicle of the plurality of vehicles 10a to 10n, a future vehicle location at a given future point of time is determined based on data from the static nodes and the obtained real-time vehicle travelling profiles 180a to 180n. The future vehicle location is here defined by the number of the static nodes A to J.

By way of example, the data from the static nodes A to J comprises the maximum allowed speed of the vehicles in the respective node. In this context, it is assumed that vehicle travels as the maximum allowed speed. Moreover, the data from the static nodes A to J here comprises data indicative of the length of the path ahead, e.g. the length of the path as defined by the respective static node. The data from the static nodes are then combined with the current location and the path ahead (as obtained by the real-time data). As such, data from the static nodes A to J and the obtained real-time vehicle travelling profiles 180a to 180n are used to determine where a specific vehicle will be at a certain point in time.

Moreover, the processing circuitry 102 is also configured to generate a traffic planning data structure 105 for the plurality of the vehicles, the traffic planning data structure containing, for each vehicle, data indicative of the determined vehicle location at the given point in time and the positional order of the static node occupied by the vehicle. The traffic planning data structure 105 is configured to store and organizing the data indicative of the determined vehicle location at the given point in time and the positional order of the static node occupied by the vehicle. In one example, the traffic planning data structure is a database. However, other data structures are also possible to store and represent the data. Hence the traffic planning data structure can be any type of data representation/container structure.

This means that the processing circuitry 102 generate a data structure, such as creating a table. The data structure contains data indicative of the static node in which a vehicle is present at defined points in time. In an example where the data structure is a table, the table will show the static node in which a vehicle is present at defined points in time (e.g., every second). In other words, the processing circuitry 102 determines current vehicle position and predict future vehicle positions for each vehicle along the vehicle path 110.

One example of a relatively simple traffic situation of a number of vehicles, such as vehicles 10a, 10b, 10c along a vehicle path 110 defined by a set of static nodes A to H is presented below in Table 1:

*Table 1.*

|  | $t_1$ | $t_2$ | $t_3$ | $t_4$ | $t_5$ | $t_6$ | $t_7$ |
|---|---|---|---|---|---|---|---|
| Vehicle 10a | A | A | D | D | H | H | H |
| Vehicle 10b | A | D | H | H |  |  |  |
| Vehicle 10c | H | H | H | F | F | A | A |

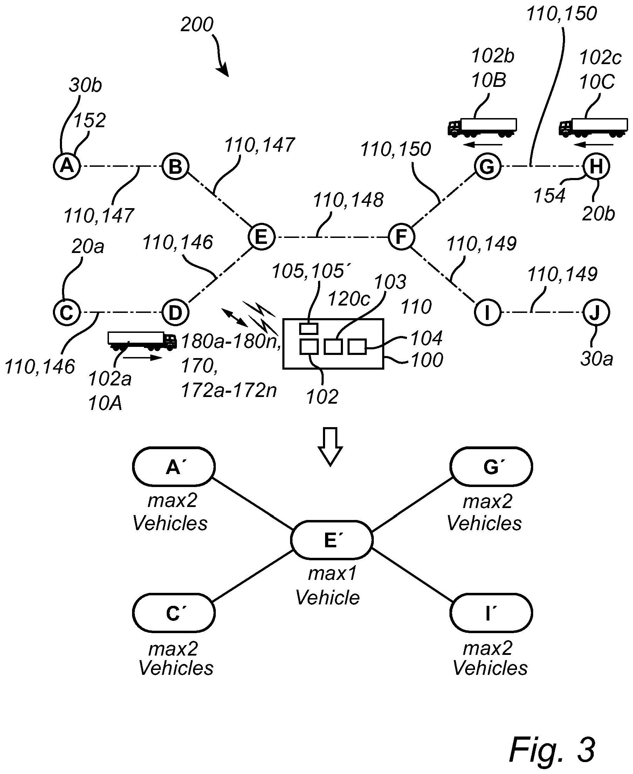

The Table 1 here represents one example of a traffic planning data structure 105. This traffic planning structure 105 is provided by the processing circuitry as described above in relation to FIG. 1, although it should be noted that the static nodes and the locations of the vehicles are different to the illustration in FIG. 1. In the table 1, as depicted above, each one of the vehicles 10a, 10b, 10c are listed based on the determined vehicle location, corresponding to a static node, at a given point in time, t1 to t7, and the positional order of the static node occupied by the vehicle. The current vehicle location is thus defined by the number of the static node. The static nodes are arranged in a positional order from A to H. Other examples of positional orders of the static nodes are illustrated in e.g. FIG. 1 and FIG. 3. Turning again to Table 1, each one of the vehicles 10a, 10b, 10c is also listed based on predicted vehicle location at a future point in time and the positional order of the static node occupied by the vehicle at the future point of time. This prediction and arrangement of the vehicles are performed by the processing circuitry 102.

Moreover, as mentioned above, each static node further has one or more vehicle-related threshold conditions. By way of example, the processing circuitry 102 determines that each one of the static nodes A, D, H and F has a vehicle-related threshold condition defining a maximum number of allowed vehicles in a given static node, e.g as presented in the below Table 2.

*Table 2.*

| Node | Max allowed vehicles |
|---|---|
| A | 3 |
| D | 2 |
| H | 1 |
| F | 2 |

As may be gleaned from the above Table 2, each one of the static nodes A, D, H and F have a predefined vehicle-related threshold condition of a maximum number of allowed vehicles.

Based on the above data representation from Table 1 and Table 2, the processing circuitry 102 is able to check, for each time instance $t_x$, whether the number of vehicles standing on the same node, or is predicted to be standing on the same node, exceed, or will exceed, the maximum allowed number of vehicles for that node.

As such, from the generated traffic planning data structure 105, the processing circuitry 102 is configured to determine that at least one vehicle of the plurality of vehicles 10a to 10c exceeds at least one vehicle-related threshold condition of the set of vehicle-related threshold conditions.

In this example, as may be gleaned from Table 1 and Table 2, the vehicle 10a and vehicle 10b are standing at time t1 on node A. As illustrated in Table 2, there can be three vehicles in node A at the same time, so this traffic situation is acceptable. However, at time t3 vehicle 10b and vehicle 10c are standing on node H. As illustrated in table 2, there can be only one vehicle at the same time in node H, so this traffic situation is not acceptable.

In response to this determination, the processing circuitry 102 is configured to initiate and evaluate a possible replan of the traffic situation. This replan is performed by applying a cost function. A cost function is a well-known mathematical or computational function generally defining single-objective optimization problems to quantify the performance or cost associated with individual solutions, with the goal of finding the best solution with respect to that single criterion.

The cost function of the present disclosure enables the objective assessment and optimization of the above exemplified traffic citation by determining the "cost" or quality of potential solutions, thus assisting in the herein described traffic planning decision-making, optimization, and control processes.

Accordingly, the processing circuitry 102 is here also configured to apply a cost function on the data contained in the generated traffic planning data structure 105 to identify an alternative movement control 170 of at least one vehicle of the plurality of vehicles 10a to 10n through the at least one vehicle path 110. Moreover, the alternative movement control 170 is here favorable for at least one traffic planning criterion among a group of criteria. The group of criteria comprises the following criterion: reducing fuel consumption, fulfilling a transport mission and reducing vehicle wear.

To this end, the cost function is used by an algorithm that will try to resolve the situation where one or more vehicles exceed the vehicle-related threshold condition. The cost function will take as input the generated traffic planning data structure and, optionally any relevant obtained real-time vehicle travelling profiles of the plurality of vehicles. As there might be several solutions to the same traffic situation, a cost function is used to evaluate which solution is the best one, i.e. the one with the lowest "cost".

It should be noted that the various traffic planning criteria, i.e. fuel consumption, fulfilling transport mission and vehicle wear are generally predicted parameters, which is further described herein. The prediction of these traffic planning criteria is performed by the processing circuitry 102.

By taking at least one traffic planning criterion among a group of criteria, i.e. the group of reducing fuel consumption, fulfilling a transport mission and reducing vehicle wear, the processing circuitry 102 searched for a traffic planning solution improving at least one criterion among the three criteria. In other words, among the potential traffic planning solutions, including e.g. one or more alternative movement controls, that actually resolve the problem, the processing circuitry 102 may be satisfied if it can identify and choose at least one traffic planning solution (alternative movement control 170 of at least one vehicle) that improves at least one of criteria.

Typically, although strictly not required, the processing circuitry 102 is also configured to apply a cost function on the data contained in the generated traffic planning data structure 105 to identify an alternative movement control 170 of at least one vehicle of the plurality of vehicles 10a to 10n through the at least one vehicle path 110, wherein the alternative movement control 170 is favorable for all three traffic planning criterion, i.e. for reducing fuel consumption, fulfilling a transport mission and reducing vehicle wear.

In addition, the processing circuitry 102 is here configured to apply a cost function which compares a number of different alternative movement controls for the plurality of vehicles based on predicted fuel consumption, predicted time for fulfilling a transport mission, predicted vehicle wear.

As mentioned above, the cost function is parametrized by domain specific parameters, i.e. traffic planning criterion. These traffic planning criterion includes predicted fuel consumption, predicted fulfilling a transportation mission and predicted vehicle wear.

When a cost function is parametrized by the parameters (traffic planning criterion) fuel consumption, fulfilling a transportation mission, and vehicle wear, it means that the cost function is defined in a way that takes into account specific factors or considerations that are relevant to productivity, especially in the context of transportation. In this context, predicted fuel consumption reflects the amount of fuel that a vehicle is predicted to consume during its operation. It is a key factor in transportation cost analysis, as fuel costs are a significant part of the overall expenses. The other traffic planning criterion, fulfilling a transportation mission means that the cost function considers the successful completion of a transportation mission as a key factor. The nature of the transportation mission, its goals, and the efficiency with which it is fulfilled can influence the overall cost. The remaining traffic planning criterion, i.e. predicted vehicle wear, relates to predicted wear and tear on, or of, a vehicle, which occurs over time and through usage. Vehicle wear may include factors such as maintenance costs, repair costs, and the lifespan of the vehicle. Higher wear may lead to increased maintenance expenses and a shorter vehicle lifespan, affecting the overall cost.

By parametrizing the cost function with these traffic planning criterion (domain-specific parameters), the aim is to create a more accurate and tailored model for evaluating costs in the transportation context. The processing circuitry can be configured to adjust the values of these traffic planning criterion to simulate different scenarios, optimize transportation routes, or make decisions that balance cost considerations with mission fulfillment and vehicle longevity.

There are different options on the cost function depending on which traffic planning criterion the processing circuitry 102 is configured to optimize. Below are some possibilities in the form of functions that can be tuned based on preferences. These functions provide a number of examples of conceivable cost functions.

Assuming the following functions:

- $\text{MIN}_{\text{TIME}}$: minimize total time of the different vehicles: $\text{minimize}(\text{time}(\text{vehicle}10a) + \text{time}(\text{vehicle}10b) + \text{time}(\text{vehicle}10c))$

- $\text{MIN}_{\text{FUEL}}$: minimize fuel: $\text{minimize}(\text{fuel}(\text{vehicle}10a) + \text{fuel}(\text{vehicle}10b) + \text{fuel}(\text{vehicle}10c))$

- $\text{MIN}_{\text{WEAR}}$: vehicle wear: $\text{minimize}(\text{vehicle\_wear}(\text{vehicle}10a) + \text{vehicle\_wear}(\text{vehicle}10b) + \text{vehicle\_wear}(\text{vehicle}10c))$

Then, the cost can be defined according to the following:

$$Cost = a \times MIN_{TIME} + b \times MIN_{FUEL} + c \times MIN_{WEAR}$$

wherein a, b, and c are constants.

Generally, the constants are non-negative values, but it may vary for different cost functions and thus depend on the selected cost function. Hence, both non-negative and negative may be conceivable. It may also be possible to tune the $\text{MIN}_{\text{TIME}}$ function so that it spreads the changes (e.g. slow down vehicle speeds) among all the vehicles or favor only the vehicle in the worst condition, such as:

- $\text{MIN}_{\text{TIME\_WORST}}$: minimize the vehicle that has the longest time: $\text{minimize}(\text{max}(\text{time}(\text{vehicle }10a), \text{time}(\text{vehicle }10b), \text{time}(\text{vehicle }10c)))$

It may also be possible that the above example can be applied in a similar way to the other $\text{MIN}_{\text{WEAR}}$ and $\text{MIN}_{\text{FUEL}}$ functions.

The outcome from the above cost function operation is an updated time plan for all vehicles, in which there will not be more vehicles than allowed in any given static node of the set of static nodes A to J. The updated time plane corresponds to an updated traffic planning data structure 105'.

The vehicles 10a, 10b, 10c will then adjust their speed profile according to the updated time plan.

Accordingly, the processing circuitry 102 is thus also configured to update the traffic planning data structure 105 to the updated traffic planning data structure 105' based on the identified alternative movement control 170; and subsequently feed motion commands 172a to 172n to the plurality of vehicles 10a, 10b, 10c for realizing their routes based on the updated traffic planning data structure 105'.

By way of example, the identified alternative movement control 170 in the updated traffic planning data structure 105' comprises an adjustment of at least one vehicle travelling profile of the vehicle travelling profiles 180a - 180n (180a - 180c in the example in FIG. 1).

However, it may be more likely that the cost function identifies an alternative movement control 170 involving several vehicles. Hence, the updated traffic planning data structure 105' comprises an alternative movement control 170 including adjustments of several vehicle travelling profiles.

As such, the identified alternative movement control 170 in the updated traffic planning data structure 105' comprises an adjustment of a plurality of vehicle travelling profiles 180a - 180n.

By way of example, the identified alternative movement control 170 is an adjustment in vehicle speed of one or more vehicles 10a, 10b, 10c. That is, the identified alternative movement control 170 is an adjustment in vehicle speed of one or more vehicle travelling profiles 180a - 180c. In such example, the processing circuitry 102 feeds motion commands 172a to 172n to the vehicles for realizing their routes based on the updated traffic planning data structure 105' including an adjustment in vehicle speed of each one of the vehicles 10a, 10b, 10c.

Also, the processing circuitry 102 is configured to determine that the updated traffic planning structure 105' based on the identified alternative movement control 170 meets the set of vehicle-related threshold conditions defined by the set of static nodes A to J.

Reverting to the operation of determining, from the traffic planning data structure 105, that at least one vehicle of the plurality of vehicles 10a to 10n exceeds at least one vehicle-related threshold condition of the set of vehicle-related threshold conditions. This operation can include several different examples so as to determine whether one or more vehicles may exceed one or more vehicle-related threshold conditions. By way of example, the processing circuitry 102 is configured to determine that at least one vehicle of the plurality of vehicles 10a to 10n exceeds the set of vehicle-related threshold conditions by determining that a vehicle in a given static node exceeds the maximum allowed speed for a vehicle passing through the given static node.

In addition, or alternatively, the processing circuitry 102 is configured to determine that at least one vehicle of the plurality of vehicles exceeds the set of vehicle-related threshold conditions in a given static node by determining that the number of vehicles in the given static node exceeds the maximum number of allowed vehicles in the given static node.

A number of examples of controlling movements of a plurality of vehicles 10a to 10n in the confined geographical area 200 will now briefly be described in relation to the above operations.

FIGs. 2A to 2C illustrate examples of the computer system 100, wherein the processing circuitry 102 of the computer system 100 performs the above-mentioned operations, including the operations of determining, for each vehicle of the plurality of vehicles 10a to 10n, the current vehicle location at a given point of time based on data from the static nodes A to J and the obtained real-time vehicle travelling profiles 180a to 180n; generating the traffic planning data structure 105 for the plurality of the vehicles 10a to 10n, the traffic planning data structure 105 containing, for each vehicle, data indicative of the determined vehicle location at the given point in time and the positional order of the static node occupied by the vehicle; from the generated traffic planning data structure 105, determining that at least one vehicle of the plurality of vehicles 10a to 10n exceeds at least one vehicle-related threshold condition of the set of vehicle-related threshold conditions; applying the cost function on the data contained in the generated traffic planning data structure 105 to identify an alternative movement control 170 of the at least one vehicle through the at least one vehicle path, the alternative movement control being favorable for at least one traffic planning criterion among a group of criteria comprising reducing fuel consumption, fulfilling a transport mission and reducing vehicle wear; and updating the traffic planning data structure 105 to an updated traffic planning data structure 105' based on the identified alternative movement control.

FIGs. 2A to 2C are based on the confined geographical area 200 in FIG. 1, in which the vehicle path 110 is defined by the subset of static nodes A to J.

Accordingly, in this example, as illustrated in FIG. 1 and FIGs. 2A to 2C, each static node is given a letter A to J. To minimize the input to the traffic planner algorithm (corresponding to the cost function), the node topology may be simplified. By way of example, the node topology may be simplified based on the assumption and knowledge that the only places the traffic planner (e.g the computer system 100) needs to make a traffic planning decision in is when switching between single lane or dual lane (or switching from one road segment to another road segment), allowing the computer system 100 to consider all static nodes between static nodes switching from/to single lane/dual lanes can be combined into one. In the simplified topology all nodes are marked with the symbol "'", as illustrated in FIG. 1. Each static node has information about the time it takes for a vehicle to pass through the respective static node on the basis of the maximum speed, while taking into consideration the value of the maximum number of vehicles allowed in respective static node. All vehicles have a predicted route along the vehicle path 110 which is defined by a planned static nodes sequence. In this example, the following planned static nodes sequences are determined by the computer system 100: Vehicle 10a: Nodes: BCDEHIJ; Vehicle 10b: Nodes: DEHIJ; and Vehicle 10c: Nodes: JIHGFCBA.

Moreover, in this example, it is assumed, for simplicity, that each static node (before combining the static nodes) will take about one second to pass. Other time period estimations may also be possible, such as 5 sec, 10 sec, or even minutes and hours.

FIG. 2A illustrates an example of a timeline for the vehicles 10a, 10b, 10c. Given the starting positions of the vehicles 10a, 10b, 10c, the timeline for the vehicles 10a, 10b, 10c is determined and the processing circuitry 102 determines if any nodes overlap may occur during the movement of the vehicles along the vehicle path 110. In FIG. 2A, one example of a node overlap is indicated by the dotted box (the oval-shaped dotted line).

As illustrated, two vehicles, vehicles 10b and 10c, will be in the same node (node H') that only allows one vehicle in the node, see FIG. 1. Accordingly, a replan is needed. The replan is performed by the operations of the processing circuitry 102, as described herein, including applying the cost function, as described herein. The replan is illustrated in FIG. 2B.

Thus, a first iteration of replanning is performed, in which it is proposed to slow down vehicle 10b. This results in an extra D' in its timeline, which is illustrated in FIG. 2B.

Two vehicles, vehicles 10a and 10b, will now be in the same static node, i.e. the static node D'. The number of vehicles in static node D' does not exceed the number of allowed vehicles in that static node (see FIG. 1 and the static node D').

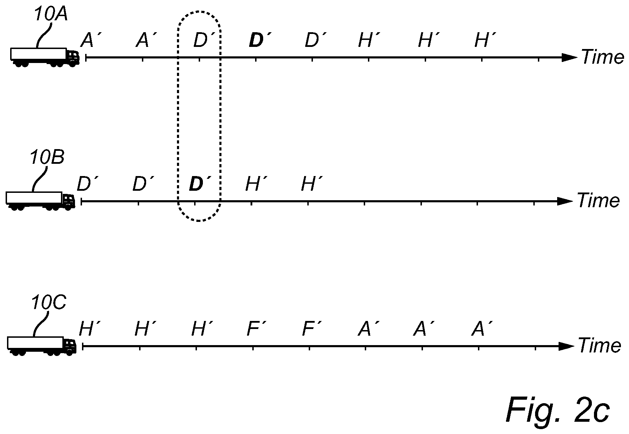

However, with the new replan as illustrated in FIG. 2B, there are two vehicles, vehicles 10a and 10b in node H' further ahead in the plan. Hence, another iteration is needed. The replan is performed by applying the cost function as described herein. The result of the new replanning is shown in FIG. 2C, in which vehicle 10a is slowed down in node D', resulting in an extra D' added to the timeline of vehicle 10a.

The final result of the replanning, as illustrated in FIG. 2C, indicates that both vehicle 10a and vehicle 10b should reduce their speed by about 50% when travelling in static node D'. By reducing the speed instead of controlling the speed to zero, i.e. controlling the vehicle to stand-still, the fuel consumption and vehicle wear can be reduced.

Hence, it is determined, by the processing circuitry 102, that the updated traffic planning data structure 105' based on the identified alternative movement control 170 meets the set of vehicle-related threshold conditions defined by the set of static nodes.

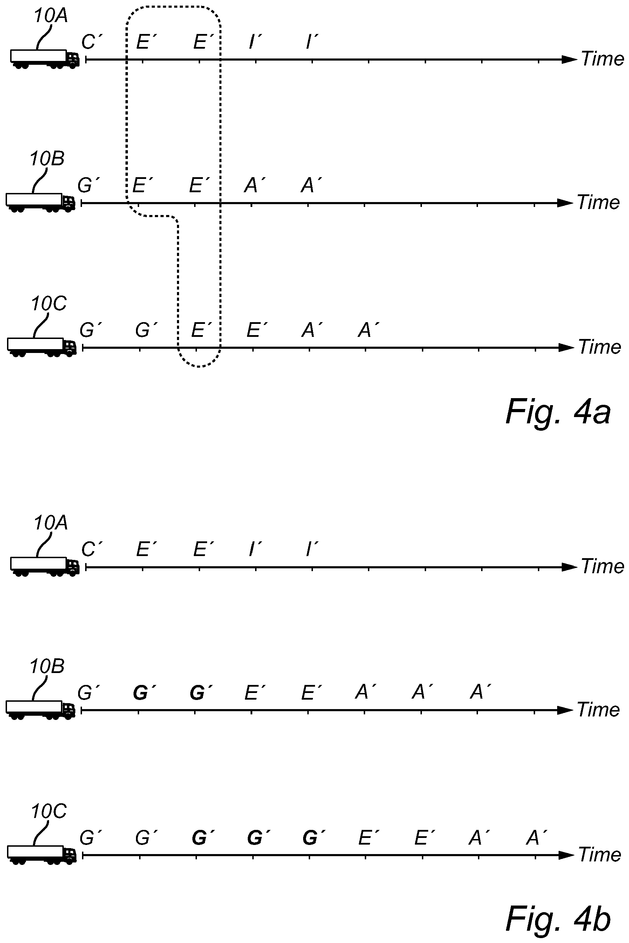

Another example is illustrated in FIG. 3 in combination with FIGS. 4A to 4C, in which FIG. 3 depicts another example of a confined geographical area 200, while FIGS. 4A to 4C illustrate timelines (similar to FIGS. 2A to 2C). Also in FIG. 3, the vehicle path 110 is defined by the subset of static nodes A to J.

In FIG. 3, the vehicle path 110 comprises several departure positions, e.g. loading stations 20a, 20b, and several destination positions, e.g. chutes 30a, 30b.

Moreover, the vehicle path 110 here contains five road segments. The vehicle path 110 thus comprises the road segments 146, 147, 148, 149, 150. Each one of the road segments may be defined by one or more static nodes A to J, as depicted in FIG. 3. Moreover, a pair of road segments may join (or intersect) at a junction point, such as the road segments 146 and 147, which intersect at the static node E, whereby the vehicle path 110 is further continued along the road segment 148. A road segment, such as the road segment 148, may also extend to a junction point, e.g. defined by the static node F, where the vehicle path 110 continues into two separate road segments, i.e. road segments 149 and 150, as illustrated in FIG. 3.

In FIG. 3, the vehicle path 110 is defined by a dual line, which is formed by road segments 146 and 147, followed by a single lane, which is formed by road segment 148, and subsequently a dual line, which is formed by road segments 149 and 150. Other types of vehicle path(s) can also be defined by means of the set of static nodes A to J. The vehicle path may of course also be defined by any number of static node, and not necessarily the set of statis nodes A to J.

Besides these differences, the example in FIG. 3 is the same as the example in FIG. 1. Hence, the computer system 100 of FIG. 3 is configured to perform the same operations as the computer system 100 and processing circuitry 102 of FIG. 1 and FIGS. 2A to 2C.

In the example of FIG. 3, it is also assumed, for simplicity, that each static node (before combining the static nodes) will take about one second to pass. FIG. 4A illustrates the timeline for the vehicles 10a, 10b, 10c. Given the starting positions of the vehicles 10a, 10b, 10c, the timeline for the vehicles is determined and the processing circuitry 102 determines if there are any static nodes overlap. In FIG. 4A, all three vehicles 10a, 10b, 10c are in a static node that only allows one vehicle. A replan by the processing circuitry 102 is thus needed based on the operations described in relation to FIG 1. The computer system 100 may have at least two possible options, which are illustrated in FIG. 4B. The first option, as illustrated in FIG. 4B, is based on vehicle operations of slowing down vehicle 10b and vehicle 10c. The second option, as illustrated in FIG. 4B, is based on the operations of slowing down vehicle 10a and vehicle 10c.

Moreover, by performing the operations as described above, the processing circuitry 102 is configured to identify two viable traffic planning alternatives where five seconds are added to the total time plan of the vehicles.

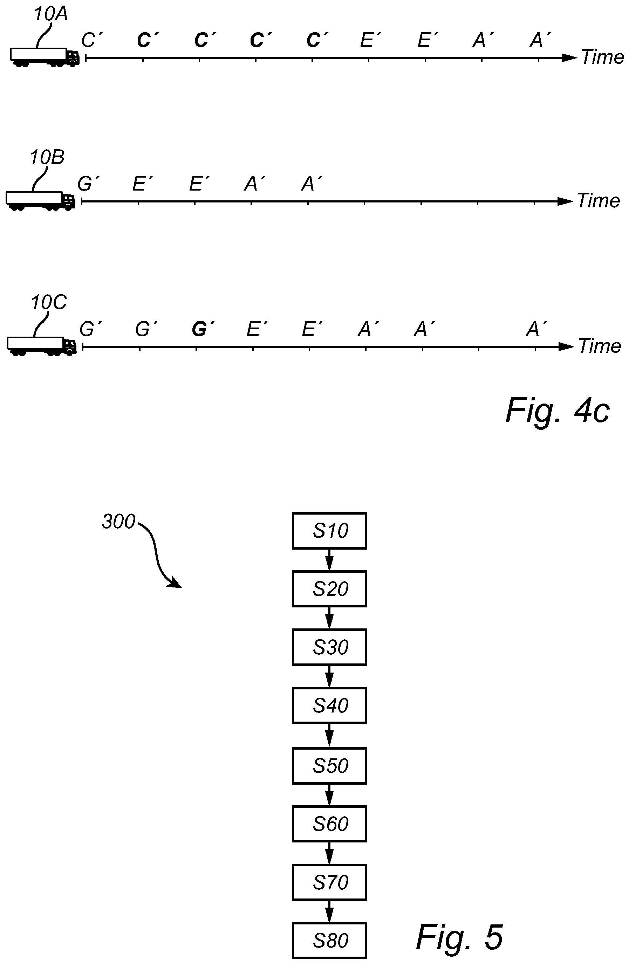

The choice of the first option or second option can be different based on vehicle- or path-related parameters, such as the topology data and data in the vehicle travelling profiles. By progressively performing more/less long slow-down sequences in a given static node (like C' in FIG. 4C), it may be possible for the processing circuitry 102 to favor an even spread of added time among many vehicles or, instead, concentrate the slow-down operation on one of the vehicles. An example of when it would be better for one vehicle to stop instead of two vehicles moving slower is if the road slopes downhill and then uphill. In that case, it may be better to maintain the momentum instead of slowing down one or more vehicles.

It should also be readily appreciated that the travelling data, as described above, is generally obtained from the plurality of the vehicles 10a, 10b etc. Hence, each one of the vehicles 10a, 10b comprises a corresponding processing circuitry 102a, 102b configured to send travelling data related to the operation of vehicle. The corresponding processing circuitry 102a, 102b of the corresponding vehicle is also configured to receive data from the processing circuitry 102 so as to update one or more parameters in the vehicle travelling profile, such as the speed of the vehicle.

Generally, the processing circuitry 102 of the computer system 100 obtains real-time vehicle travelling profiles 180a to 180n from the vehicles 10a to 10n ahead of the vehicle path 110 or when the vehicles 10a to 10n are operating along the vehicle path 110. The vehicles may generally have received transportation missions to move from the departure position 20 to the destination position 30. In other words, the vehicles10a to 10n need to travel along and through the vehicle path 110.

The data from the vehicle profiles 180a to 180n may generally include one or more parameters that are comparative to each other. The vehicle profiles can thus be considered to form comparative measures for the processing circuitry 102.

The data making up the vehicle profiles 180a to 180n can also be gathered from various vehicle sensors, from navigation systems of the vehicles, from data received from one or more control units of each vehicle, and/or from various technologies and systems for tracking and monitoring vehicles, such as GPS.

The processing circuitry 102 may also be configured to take other parameters into account, such as road conditions, visibility, weather, and other environmental factors that could affect the relative differences between the vehicles.

FIG. 5 is a flow chart of a method according to an example. More specifically FIG. 5 is an exemplary computer implemented method 300 according to an example. The computer-implemented method 300 is intended for controlling movements of a plurality of vehicles 10a to 10n in the confined geographical area 200. The computer implemented method 300 is implemented by the processing circuitry 102 of the computer system 100.

As illustrated in FIG. 5, the computer-implemented method 300 comprises a step of defining S10, by the processing circuitry 102 of the computer system 100, at least one vehicle path 110 within the confined geographical area 20 by a subset of static nodes A to J, the subset of static nodes defining a topological representation of the at least one vehicle path 200, each static node further having a set of vehicle-related threshold conditions.

Next, the computer-implemented method 300 comprises a step of obtaining S20, by the processing circuitry 102 of the computer system, real-time vehicle travelling profiles of the plurality of vehicles.

Subsequently, the computer-implemented method 300 comprises a step of determining S30, by the processing circuitry 102 of the computer system, for each vehicle of the plurality of vehicles, a current vehicle location at a given point of time based on data from the static nodes and the obtained real-time vehicle travelling profiles.

In addition, the computer-implemented method 300 comprises a step of generating S40, by the processing circuitry 102 of the computer system 100, a traffic planning data structure 105 for the plurality of the vehicles, the traffic planning data structure 105 containing, for each vehicle, data indicative of the determined vehicle location at the given point in time and the positional order of the static node occupied by the vehicle.

Further, the computer-implemented method 300 comprises a step of determining S50, from the generated traffic planning data structure 105, and by the processing circuitry 102 of the computer system 100, that at least one vehicle of the plurality of vehicles exceeds at least one vehicle-related threshold condition of the set of vehicle-related threshold conditions.

Next, the computer-implemented method 300 comprises a step of applying S60, by the processing circuitry 102 of the computer system 100, a cost function on the data contained in the generated traffic planning data structure to identify an alternative movement control 170 of the at least one vehicle through the at least one vehicle path, the alternative movement control 170 being favorable for at least one traffic planning criterion among a group of criteria comprising reducing fuel consumption, fulfilling a transport mission and reducing vehicle wear.

Moreover, the computer-implemented method 300 comprises a step of updating S70, by the processing circuitry 102 of the computer system 100, the traffic planning data structure 105 to an updated traffic planning data structure 105' based on the identified alternative movement control 170.

Finally, the computer-implemented method 300 comprises a step of feeding S80, by the processing circuitry 102 of the computer system 100, motion commands 172a to 172n to the plurality of vehicles for realizing their routes based on the updated traffic planning data structure.

The flow-chart in FIG. 5 is only a schematic overview of the order of the steps of the method 300. The method 300 as exemplified by the above example of FIG. 5 can optionally include any other feature or operation as described in relation to the processing circuitry 102, as mentioned herein.

Further details of one example of a computer system that can be used as the computer system 100 will now be described in relation to FIG. 6

FIG. 6 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Moreover, the present disclosure may be exemplified by any one of the below examples.

Example 1: A computer system 100 for controlling movements of a plurality of vehicles 10a to 10n in a confined geographical area 200, the computer system comprises processing circuitry 102 configured to: define at least one vehicle path 110 within the confined geographical area by a subset of static nodes, the subset of static nodes defining a topological representation of the at least one vehicle path, each static node further having a set of vehicle-related threshold conditions; obtain real-time vehicle travelling profiles of the plurality of vehicles; determine, for each vehicle of the plurality of vehicles, a current vehicle location at a given point of time based on data from the static nodes and the obtained real-time vehicle travelling profiles; generate a traffic planning data structure 105 for the plurality of the vehicles, the traffic planning data structure containing, for each vehicle, data indicative of the determined vehicle location at the given point in time and the positional order of the static node occupied by the vehicle; from the generated traffic planning data structure, determine that at least one vehicle of the plurality of vehicles exceeds at least one vehicle-related threshold condition of the set of vehicle-related threshold conditions; apply a cost function on the data contained in the generated traffic planning data structure to identify an alternative movement control 170 of the at least one vehicle through the at least one vehicle path, the alternative movement control 170 being favorable for at least one traffic planning criterion among a group of criteria comprising reducing fuel consumption, fulfilling a transport mission and reducing vehicle wear; update the traffic planning data structure to an updated traffic planning data structure 105' based on the identified alternative movement control 170; and feed motion commands 172a to 172n to the plurality of vehicles for realizing their routes based on the updated traffic planning data structure.

Example 2: A computer system 100 according to example 1, wherein the identified alternative movement control 170 in the updated traffic planning data structure comprises an adjustment of one or more vehicle travelling profiles.

Example 3: Computer system of example 1 or example 2, wherein the set of vehicle-related threshold conditions comprises at least a threshold condition defining a maximum allowed speed for a vehicle passing through a given static node.

Example 4: Computer system of example 3, wherein the processing circuitry is configured to determine that at least one vehicle of the plurality of vehicles exceeds the set of vehicle-related threshold conditions by determining that a vehicle in a given static node exceeds the maximum allowed speed for a vehicle passing through the given static node.

Example 5: Computer system of any of examples 1 to 4, wherein the set of vehicle-related threshold conditions comprises at least a threshold condition defining a maximum number of allowed vehicles in a given static node.

Example 6: Computer system of example 5, wherein the processing circuitry is configured to determine that at least one vehicle of the plurality of vehicles exceeds the set of vehicle-related threshold conditions in the given static node by determining that the number of vehicles in the given static node exceeds the maximum number of allowed vehicles in the given static node.

Example 7: Computer system of any of examples 1 to 6, wherein the at least one vehicle path further contains at least one route segment with an entrance and an exit for the vehicle.

Example 8: Computer system of any of examples 1 to 7, wherein the vehicle travelling profiles comprises vehicle travelling data and vehicle operational status data.

Example 9: Computer system of example 8, wherein the vehicle travelling data comprises any one of current vehicle speed of one or more vehicles, estimated time of arrival to a destination for one or more vehicles, and travel plan indicative of a required set of nodes to traverse for one or more vehicles.

Example 10: Computer system of claim 8 or claim 9, wherein the vehicle operational status data comprises data indicative of a vehicle capability parameter.

Example 11: The computer system of any claims 1 to 10, wherein the vehicle path within the confined geographical area is defined by a subset of static nodes using a route optimizing algorithm.

Example 12: The computer system of any examples 1 to 11, wherein cost function is configured to compare a number of different alternative movement controls for the plurality of vehicles based on predicted fuel consumption, predicted time for fulfilling a transport mission, predicted vehicle wear.

Example 13: The computer system of any examples 1 to 12, wherein the updated traffic planning data structure based on the identified alternative movement control 170 meets the set of vehicle-related threshold conditions defined by the set of static nodes.

Example 14: A vehicle 1 comprising the computer system of any of examples 1-13.

Example 15: A computer-implemented method 300 for controlling movements of a plurality of vehicles in a confined geographical area, the computer-implemented method comprising: defining S10, by a processing circuitry of a computer system, at least one vehicle path 110 within the confined geographical area by a subset of static nodes, the subset of static nodes defining a topological representation of the at least one vehicle path, each static node further having a set of vehicle-related threshold conditions; obtaining S20, by the processing circuitry of the computer system, real-time vehicle travelling profiles of the plurality of vehicles; determining S30, by the processing circuitry of the computer system, for each vehicle of the plurality of vehicles, a current vehicle location at a given point of time based on data from the static nodes and the obtained real-time vehicle travelling profiles; generating S40, by the processing circuitry of the computer system, a traffic planning data structure for the plurality of the vehicles, the traffic planning data structure containing, for each vehicle, data indicative of the determined vehicle location at the given point in time and the positional order of the static node occupied by the vehicle; from the generated traffic planning data structure, determining S50, by the processing circuitry of the computer system, that at least one vehicle of the plurality of vehicles exceeds at least one vehicle-related threshold condition of the set of vehicle-related threshold conditions; applying S60, by the processing circuitry of the computer system, a cost function on the data contained in the generated traffic planning data structure to identify an alternative movement control 170 of the at least one vehicle through the at least one vehicle path, the alternative movement control 170 being favorable for at least one traffic planning criterion among a group of criteria comprising reducing fuel consumption, fulfilling a transport mission and reducing vehicle wear; updating S70, by the processing circuitry of the computer system, the traffic planning data structure to an updated traffic planning data structure based on the identified alternative movement control 170; and feeding S80, by the processing circuitry of the computer system, motion commands 172a to 172n to the plurality of vehicles for realizing their routes based on the updated traffic planning data structure.

Example 16: A computer program product comprising program code for performing, when executed by the processing circuitry of any of examples 1-14, the method of example 15.

Example 17: A non-transitory computer-readable storage medium comprising instructions, which when executed by the processing circuitry of any of examples 1-14, cause the processing circuitry to perform the method of example 15.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (100) for controlling movements of a plurality of vehicles (10a to 10n) in a confined geographical area (200), wherein the computer system comprises processing circuitry (102) configured to:

   - define at least one vehicle path (110) within the confined geographical area by a subset of static nodes, the subset of static nodes defining a topological representation of the at least one vehicle path, each static node further having a set of vehicle-related threshold conditions;
   - obtain real-time vehicle travelling profiles of the plurality of vehicles;
   - determine, for each vehicle of the plurality of vehicles, a vehicle location at a given point of time based on data from the static nodes and the obtained real-time vehicle travelling profiles;
   - generate a traffic planning data structure (105) for the plurality of the vehicles, the traffic planning data structure containing, for each vehicle, data indicative of the determined vehicle location at the given point in time and the positional order of the static node occupied by the vehicle;
   - from the generated traffic planning data structure, determine that at least one vehicle of the plurality of vehicles exceeds at least one vehicle-related threshold condition of the set of vehicle-related threshold conditions;
   - apply a cost function on the data contained in the generated traffic planning data structure to identify an alternative movement control (170) of the at least one vehicle through the at least one vehicle path, the alternative movement control being favorable for at least one traffic planning criterion among a group of criteria comprising reducing fuel consumption, fulfilling a transport mission and reducing vehicle wear;
   - update the traffic planning data structure to an updated traffic planning data structure (105') based on the identified alternative movement control; and
   - feed motion commands (172a to 172n) to the plurality of vehicles for realizing their routes based on the updated traffic planning data structure.

2. Computer system of claim 1, wherein the identified alternative movement control in the updated traffic planning data structure comprises an adjustment of one or more vehicle travelling profiles.

3. Computer system of claim 1 or claim 2, wherein the set of vehicle-related threshold conditions comprises at least a threshold condition defining a maximum allowed speed for a vehicle passing through a given static node.

4. Computer system of claim 3, wherein the processing circuitry is configured to determine that at least one vehicle of the plurality of vehicles exceeds the set of vehicle-related threshold conditions by determining that a vehicle in a given static node exceeds the maximum allowed speed for a vehicle passing through the given static node.

5. Computer system of any of claims 1 to 4, wherein the set of vehicle-related threshold conditions comprises at least a threshold condition defining a maximum number of allowed vehicles in a given static node.

6. Computer system of claim 5, wherein the processing circuitry is configured to determine that at least one vehicle of the plurality of vehicles exceeds the set of vehicle-related threshold conditions in the given static node by determining that the number of vehicles in the given static node exceeds the maximum number of allowed vehicles in the given static node.

7. Computer system of any of claims 1 to 6, wherein the at least one vehicle path further contains at least one route segment with an entrance and an exit for the vehicle.

8. Computer system of any of claims 1 to 7, wherein the vehicle travelling profiles comprises vehicle travelling data and vehicle operational status data.

9. Computer system of claim 8, wherein the vehicle travelling data comprises any one of current vehicle speed of one or more vehicles, estimated time of arrival to a destination for one or more vehicles, and travel plan indicative of a required set of nodes to traverse for one or more vehicles.

10. Computer system of claim 8 or claim 9, wherein the vehicle operational status data comprises data indicative of a vehicle capability parameter.

11. The computer system of any claims 1 to 10, wherein the vehicle path within the confined geographical area is defined by a subset of static nodes using a route optimizing algorithm.

**12.** The computer system of any claims 1 to 11, wherein cost function is configured to compare a number of different alternative movement controls for the plurality of vehicles based on predicted fuel consumption, predicted time for fulfilling a transport mission, predicted vehicle wear.

**13.** The computer system of any claims 1 to 12, wherein the updated traffic planning data structure based on the identified alternative movement control meets the set of vehicle-related threshold conditions defined by the set of static nodes.

**14.** A vehicle (1) comprising the computer system of any of claims 1-13.

**15.** A computer-implemented method (300) for controlling movements of a plurality of vehicles in a confined geographical area, the computer-implemented method comprising:

- defining (S10), by a processing circuitry of a computer system, at least one vehicle path (110) within the confined geographical area by a subset of static nodes, the subset of static nodes defining a topological representation of the at least one vehicle path, each static node further having a set of vehicle-related threshold conditions;
- obtaining (S20), by the processing circuitry of the computer system, real-time vehicle travelling profiles of the plurality of vehicles;
- determining (S30), by the processing circuitry of the computer system, for each vehicle of the plurality of vehicles, a vehicle location at a given point of time based on data from the static nodes and the obtained real-time vehicle travelling profiles;
- generating (S40), by the processing circuitry of the computer system, a traffic planning data structure for the plurality of the vehicles, the traffic planning data structure containing, for each vehicle, data indicative of the determined vehicle location at the given point in time and the positional order of the static node occupied by the vehicle;
- from the generated traffic planning data structure, determining (S50), by the processing circuitry of the computer system, that at least one vehicle of the plurality of vehicles exceeds at least one vehicle-related threshold condition of the set of vehicle-related threshold conditions;
- applying (S60), by the processing circuitry of the computer system, a cost function on the data contained in the generated traffic planning data structure to identify an alternative movement control of the at least one vehicle through the at least one vehicle path, the alternative movement control being favorable for at least one traffic planning criterion among a group of criteria comprising reducing fuel consumption, fulfilling a transport mission and reducing vehicle wear;
- updating (S70), by the processing circuitry of the computer system, the traffic planning data structure to an updated traffic planning data structure based on the identified alternative movement control; and
- feeding (S80), by the processing circuitry of the computer system, motion commands to the plurality of vehicles for realizing their routes based on the updated traffic planning data structure.

**16.** A computer program product comprising program code for performing, when executed by the processing circuitry of any of claims 1-13, the method of claim 15.

**17.** A non-transitory computer-readable storage medium comprising instructions, which when executed by the processing circuitry of any of claims 1-13, cause the processing circuitry to perform the method of claim 15.

Fig. 1

EP 4 564 326 A1

Fig. 2a

Fig. 2b

Fig. 2c

Fig. 3

Fig. 4a

Fig. 4b

10A

C´  **C´**  **C´**  **C´**  **C´**  E´  E´  A´  A´  → Time

10B

G´  E´  E´  A´  A´  → Time

10C

G´  G´  **G´**  E´  E´  A´  A´  A´  → Time

*Fig. 4c*

300

S10
↓
S20
↓
S30
↓
S40
↓
S50
↓
S60
↓
S70
↓
S80

*Fig. 5*

Fig. 6

<table>
<tr><td colspan="2">Europäisches Patentamt<br>European Patent Office<br>Office européen des brevets</td><td style="text-align:center">**EUROPEAN SEARCH REPORT**</td><td>**Application Number**<br><br>EP 23 21 3596</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WAHDE MATTIAS ET AL: "A method for real-time dynamic fleet mission planning for autonomous mining", AUTONOMOUS AGENTS AND MULTI-AGENT SYSTEMS, KLUWER ACADEMIC PUBLISHERS, DORDRECHT, US, vol. 33, no. 5, 12 June 2019 (2019-06-12), pages 564-590, XP036860496, ISSN: 1387-2532, DOI: 10.1007/S10458-019-09416-Y [retrieved on 2019-06-12] * Abstract; page 564 * * page 565, line 3 – line 6 * * page 565, line 13 – line 15 * * 3.2 Missions; page 568 * * 4.1 Initial fleet mission generation 4.2 Fleet mission evaluation; page 571 * * page 567; figure 1 * * page 566, paragraph 5 * * 3.1 Topological maps; page 567 * * 3.3.2 Initial stop times; page 569 * * 4.1.1 Initial fleet mission generation Fleet mission evaluation; page 571 * * page 572, line 1 – line 3 * * 4.3 Optimization procedure; page 572 * * 4 Static fleet mission planning; page 570 * * page 572, paragraph 5 * * page 577, paragraph 4 * * figure 5 * * Conclusion; page 587 * * page 568, line 5 – line 12 * –/-- | 1-17 | INV. G08G1/00 |
|  |  |  | TECHNICAL FIELDS SEARCHED (IPC) |
|  |  |  | G08G G05D G06Q G01C |

The present search report has been drawn up for all claims

| Place of search | Date of completion of the search | Examiner |
|---|---|---|
| The Hague | 18 April 2024 | Fernández Santiago |

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 23 21 3596

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | * page 567, last line – page 568, line 2 * ----- | | |
| X | US 2023/134026 A1 (KOJCHEV STEFAN [SE] ET AL) 4 May 2023 (2023-05-04) * paragraph [0002] * * paragraph [0005] * * paragraph [0007] * * paragraph [0010] * * paragraph [0012] * * paragraph [0016] * * paragraph [0061] * * paragraph [0116] * * paragraph [0119] – paragraph [0120] * * figure 14 * * paragraph [0139] – paragraph [0141] * ----- | 1-17 | |
| A | KOJCHEV STEFAN ET AL: "A Two-Stage MIQP-Based Optimization Approach for Coordinating Automated Electric Vehicles in Confined Sites", IEEE TRANSACTIONS ON INTELLIGENT TRANSPORTATION SYSTEMS, IEEE, PISCATAWAY, NJ, USA, vol. 25, no. 2, 13 October 2023 (2023-10-13), pages 2061-2075, XP011959398, ISSN: 1524-9050, DOI: 10.1109/TITS.2023.3320168 [retrieved on 2023-10-13] * the whole document * ----- | 1-17 | TECHNICAL FIELDS SEARCHED (IPC) |

The present search report has been drawn up for all claims

| Place of search | Date of completion of the search | Examiner |
|---|---|---|
| The Hague | 18 April 2024 | Fernández Santiago |

EPO FORM 1503 03.82 (P04C01)

**page 2 of 2**

## ANNEX TO THE EUROPEAN SEARCH REPORT
## ON EUROPEAN PATENT APPLICATION NO.

EP 23 21 3596

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2024

| Patent document cited in search report | Publication date | Patent family member(s) | | Publication date |
|---|---|---|---|---|
| US 2023134026 A1 | 04-05-2023 | AU | 2022241466 A1 | 18-05-2023 |
| | | CN | 116090680 A | 09-05-2023 |
| | | EP | 4198670 A1 | 21-06-2023 |
| | | US | 2023134026 A1 | 04-05-2023 |

EPO FORM P0459

For more details about this annex : see Official Journal of the European Patent Office, No. 12/82